(19) **Europäisches Patentamt / European Patent Office / Office européen des brevets**

(11) **EP 2 124 017 A1**

(12) # EUROPEAN PATENT APPLICATION
published in accordance with Art. 153(4) EPC

(43) Date of publication:
**25.11.2009 Bulletin 2009/48**

(51) Int Cl.:
**G01B 11/30** (2006.01)  **G06T 1/00** (2006.01)
**H04N 1/19** (2006.01)

(21) Application number: **08712041.6**

(22) Date of filing: **27.02.2008**

(86) International application number:
**PCT/JP2008/053419**

(87) International publication number:
**WO 2008/105463 (04.09.2008 Gazette 2008/36)**

(84) Designated Contracting States:
**AT BE BG CH CY CZ DE DK EE ES FI FR GB GR HR HU IE IS IT LI LT LU LV MC MT NL NO PL PT RO SE SI SK TR**

(30) Priority: **28.02.2007 JP 2007048479**

(71) Applicant: **Nikon Corporation
Chiyoda-ku
Tokyo 100-8331 (JP)**

(72) Inventor: **FUJIMORI, Yoshihiko
Tokyo 100-8331 (JP)**

(74) Representative: **Petzold, Silke et al
R.G.C. Jenkins & Co
26 Caxton Street
London SW1H 0RJ (GB)**

(54) **MANUFACTURING METHOD FOR INSPECTION DEVICE**

(57)     In a manufacturing method for an inspection device, a distortion measurement step has a first step (S201 to S205) of a line sensor picking up an image of a linear pattern extending substantially in parallel with a main scanning axis direction to create two-dimensional image data of the linear pattern, and calculating a distortion amount in a sub-scanning axis direction in a two-dimensional image from the created two-dimensional image data of the linear pattern; and a second step (S206 to S208) of the line sensor picking up an image of an oblique linear pattern extending in an inclined direction with respect to the main scanning axis direction to create two-dimensional image data of the oblique pattern, and calculating a distortion amount in the main scanning axis direction in the two-dimensional image from the created two-dimensional image data of the oblique pattern and the distortion amount in the sub-scanning axis direction calculated in the first step.

**Fig.1**

# EP 2 124 017 A1

**Description**

TECHNICAL FIELD

The present invention relates to a manufacturing method for an inspection device which inspects a surface of a test object represented by a semiconductor wafer.

TECHNICAL BACKGROUND

An inspection device to inspect the surface of such a test object as a wafer has a line sensor that picks up an image of the test object and outputting image signals, and an image processing unit that creates two-dimensional image data of the test object based on image signals which are acquired by relatively moving the line sensor with respect to the test object in a sub-scanning direction (direction perpendicular to the longitudinal direction of the line sensor), so that the surface of the test object is inspected based on the two-dimensional image data of the test object (e.g. see Patent Document 1). When a surface of a large test object is inspected using such an inspection device, a method for picking up the image of the test object by scanning with the line sensor a plurality of times, or a method for picking up an image of the test object, which is reduced by a reduction optical system, by scanning with the line sensor once, is used. In the former case, however, it takes time to pickup the image of the test object, and in the latter case, a complicated optical system is required for the reduction optical system, and a pixel count of the image is limited by the pixel count of one line sensor. Therefore increasing the length of the line sensor is under consideration, so that the image of the entire test object can be picked up by one scan.

When a two-dimensional image acquired by the line sensor is used for inspection and measurement, distortion of the image causes an error of the inspection and measurement, so the distortion must be measured and corrected when the device is manufactured or adjusted (e.g. see Patent Document 2). In the case of measurement of the distortion using a two-dimensional camera image, an image of a lattice pattern, of which pattern position is known, is picked up, and positions of the cross-sections of the lattice pattern are measured, and the parameters for correction are calculated. In other words, the distortion amount is determined at the cross-sections of the lattice pattern, that is, the discrete positions, and based on the distortion amounts, the distortion correction parameters of the entire screen are decided. In the distortion of the two-dimensional camera image, the above mentioned method can be used since it can be assumed that the distortion amount in the screen is smooth and continuous based on the factors which generate the distortion.

Patent Document 1: National Publication of Translated Version No. 2001 - 524205

Patent Document 2: Japanese Patent Application Laid-Open No. H10-311705

DISCLOSURE OF THE INVENTION

PROBLEMS TO BE SOLVED BY THE INVENTION

In the case of a long line sensor, however, which is comprised of relatively short line sensor elements, such as one-dimensional photo-electric transfer elements, which are linearly connected, the distortion amount in the two-dimensional image is in some cases not smooth or continuous among adjacent pixels. In order to correct such a distortion of two-dimensional images, the distortion amount must be measured for all the pixels in the line sensor, which is not supported by the conventional method using a lattice pattern.

With the foregoing in view, it is an object of the present invention to provide manufacturing steps for an inspection device using a line sensor, which allows measurement of the distortion amount of all the pixels of the line sensor.

MEANS TO SOLVE THE PROBLEMS

To achieve this object, a manufacturing method for an inspection device according to a first invention is a manufacturing method for an inspection device which has: a line sensor that picks up an image of a test object and outputs image signals, and is constructed by a plurality of line sensor elements connected in a line; and an image processing unit that creates two-dimensional image data of the test object based on the image signals acquired by relatively moving the line sensor in a sub-scanning axis direction that is perpendicular to a main scanning axis direction extending in a longitudinal direction of the line sensor, and which inspects a surface of the test object based on the two-dimensional image data of the test object, the method comprising a distortion measurement step of measuring a distortion amount of the two-dimensional image.

This distortion measurement step has: a first step of the line sensor picking up an image of a linear pattern extending substantially in parallel with the main scanning axis direction to create two-dimensional image data of the linear pattern, and calculating a distortion amount of the sub-scanning axis direction in the two-dimensional image from the created two-dimensional image data of the linear pattern; and a second step of the line sensor picking up an image of an oblique pattern extending in an inclined direction with respect to the main scanning axis direction to create two-dimensional image data of the oblique pattern, and calculating a distortion amount in the main scanning axis direction in the two-dimensional image from the two-dimensional image data of the oblique pattern and the distortion amount in the sub-scanning axis direction calculated in the first step.

In the above mentioned manufacturing method, it is preferable that in the second step, the distortion of the two-dimensional image of the oblique pattern is corrected using the distortion amount in the sub-scanning axis direction calculated in the first step, to create corrected image data, and the distortion amount in the main scanning axis direction is calculated from the created corrected image data.

It is preferable that the above mentioned manufacturing method further has: a third step of calculating and storing the distortion amounts in both the main scanning axis direction and the sub-scanning axis direction for each pixel of the line sensor.

A manufacturing method for an inspection device according to a second aspect of the invention is a manufacturing method similar to the manufacturing method for an inspection device according to the first aspect of the invention, and the distortion measurement step has: a first step of the line sensor picking up an image of a linear pattern extending substantially in parallel with the main scanning axis direction to create two-dimensional image data of the linear pattern; a second step of the line sensor picking up an image of an oblique linear pattern extending in an inclined direction with respect to the main scanning axis direction to create two-dimensional image data of the oblique pattern; a third step of setting a main scanning axis distortion amount, which is a distortion amount in the main scanning axis direction in the two-dimensional image, to zero, and setting the sub-scanning axis distortion amount, which is a distortion amount in the sub-scanning axis direction in the two-dimensional image, to zero; and a fourth step of copying the two-dimensional image data of the linear pattern created in the first step and setting the copied data in virtual two-dimensional image data.

The distortion measurement step further has: a fifth step of calculating a distortion amount in the sub-scanning axis direction in the virtual two-dimensional image from the virtual two-dimensional image data, and adding the calculated distortion amount in the sub-scanning axis direction to the sub-scanning axis distortion amount; a sixth step of correcting distortion of the two-dimensional image of the oblique pattern created in the second step, using the main scanning axis distortion amount and the sub-scanning axis distortion amount, to create corrected image data; a seventh step of calculating a distortion amount in the main scanning axis direction in the corrected image from the corrected image data and adding the calculated distortion amount in the main scanning axis direction to the main scanning axis distortion amount; an eighth step of correcting the distortion of the two-dimensional image of the linear pattern created in the first step, using the main scanning axis distortion amount and the sub-scanning axis distortion amount, and setting the corrected two-dimensional image data in the virtual two-dimensional image data; and a ninth step of repeating the fifth to eighth steps for a predetermined number of times or until the distortion amount in the sub-scanning axis direction in the virtual two-dimensional image calculated in the fifth step and the distortion amount in the main scanning axis direction in the corrected image calculated in the seventh step become smaller than a predetermined value respectively.

It is preferable that the above mentioned manufacturing method further has: a tenth step of calculating and storing the distortion amounts in both the main scanning axis direction and the sub-scanning axis direction for each pixel of the line sensor.

In each of the above mentioned manufacturing methods, it is preferable that in the distortion measurement step, the line sensor is relatively moved in the sub-scanning axis direction so as to pickup the images of the linear pattern and th oblique pattern all at once.

ADVANTAGEOUS EFFECTS OF THE INVENTION

According to the present invention, in manufacturing steps of an inspection device using a line sensor, the distortion amount can be measured for all the pixels of the line sensor, including joints between line sensor elements.

BRIEF DESCRIPTION OF THE DRAWINGS

Fig. 1 is a perspective view depicting a general configuration of the inspection device;
Fig. 2 is a diagram depicting the line sensor;
Fig. 3 is a flow chart depicting the operation of the inspection device;
Fig. 4 is a plan view depicting a distortion correction target;
Fig. 5 shows a two-dimensional image of a distortion correction target picked up by the line sensor;
Fig. 6 shows a corrected image of the distortion correction target;
Fig. 7 is a flow chart depicting the distortion measurement step;

Fig. 8 is a plan view depicting a variant form of the distortion correction target; and

Fig. 9 shows the positional relationship of the oblique pattern and pixels.

DESCRIPTION OF THE PREFERRED EMBODIMENT

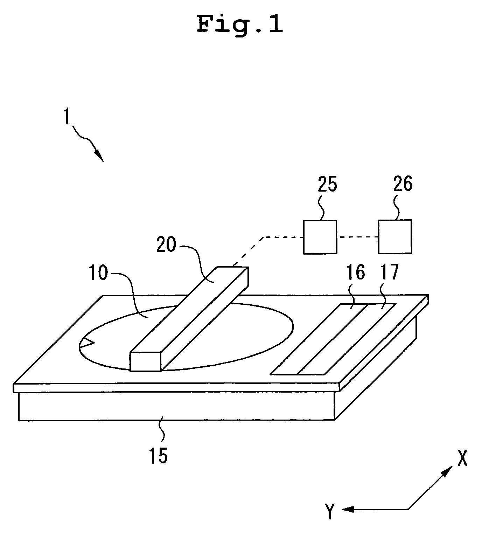

Embodiments of the present invention will now be described with reference to the drawings. Fig. 1 shows an inspection device 1 which is manufactured by a manufacturing method according to the present invention. This inspection device 1 has a stage 15 for supporting a wafer 10 which is a test object, a line sensor 20 for picking up an image of the wafer 10 supported by the stage 15, an image processing unit 25 for creating two-dimensional image data of the wafer 10, and an image display device 26, and inspects the surface of the wafer 10 based on the two-dimensional image data of the wafer 10 created by the image processing unit 25.

The stage 15 supports the wafer 10 in substantially a horizontal state, and also supports the wafer 10 such that the wafer 10 can move in a sub-scanning axis direction which is perpendicular to a main scanning axis direction extending in a direction along the longitudinal direction of the line sensor 20. Hereafter in the present embodiment, it is assumed that the main scanning axis direction is the X direction, and the sub-scanning axis direction is the Y direction, as shown in Fig. 1. In other words, the stage 15 supports the wafer 10 such that the wafer 10 can move in the Y direction. A shading correction target 16 to correct the shading, and a distortion correction target 17 for correcting distortion, are disposed on the top face of the stage 15 on which the wafer 10 is supported. The distortion includes an individual error of the line sensor 20, such as a pixel pitch error, linearity, a mechanical error generated when the line sensor 20 is relatively moved with respect to the stage 15 , and a distortion of the optical system for projecting an image of the test object to the line sensor 20.

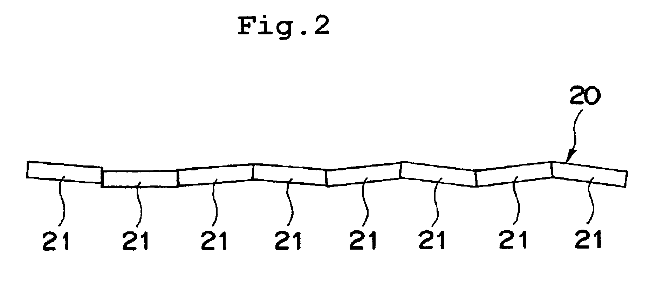

As Fig. 2 shows, the line sensor 20 is comprised of a plurality of line sensor elements, such as one-dimensional photo-electric transfer elements 21, which are connected in a line, and a main unit, which is not illustrated, for holding the one-dimensional photo-electric transfer elements 21 which are connected in a line, and outputs (one-dimensional) image signals, acquired by the one-dimensional photo-electric transfer elements 21 picking up an image of the wafer 10, to the image processing unit 25. As Fig. 1 shows, the line sensor 20 is secured above the stage 15 (substantially in a horizontal state) using securing elements, which are not illustrated, and the line sensor 20 can be relatively moved in the Y direction with respect to the wafer 10, by moving the wafer 10 supported by the stage 15 in the Y direction. The line sensor 20 is, for example, a one-dimensional CCD sensor, linear array sensor or a contact image sensor (CIS).

The image processing unit 25 creates two-dimensional image data of the wafer 10 based on (one-dimensional) image signals which are respectively acquired by relatively moving the line sensor 20 in the Y direction. When the two-dimensional image data of the wafer 10 is created, the image processing unit 25 performs a predetermined image processing on the created two-dimensional image data, and inspects the surface of the wafer 10 (detects defects on the surface of the wafer 10), and the inspection result by the image processing unit 25 and the two-dimensional image of the wafer 10 thereof are output to and displayed on the image display device 26.

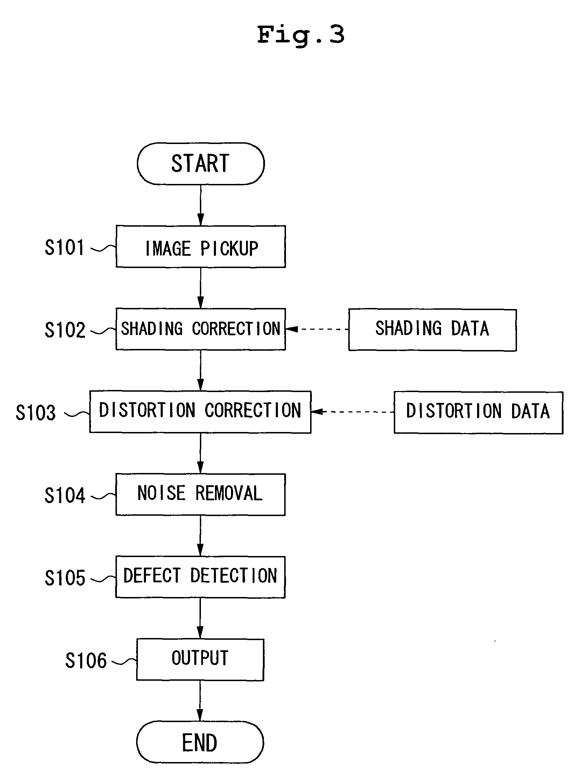

Operation of the inspection device 1 constructed like this will be described with reference to the flow chart in Fig. 3. First in step S101, the image is picked up using the line sensor 20. At this time, the line sensor 20 moves in the Y direction relatively with respect to the stage 15 and the wafer 10, picks up an image of the surface of the wafer 10 at each relatively moved position, and outputs (one-dimensional) image signals to the image processing unit 25. When the image signals are input to the image processing unit 25, the image processing unit 25 creates two-dimensional image data of the wafer 10 based on the (one-dimensional) image signal acquired respectively by relatively moving the line sensor 20 in the Y direction.

Then in step S102, the image processing unit 25 corrects the shading of the two-dimensional image of the wafer 10 created in the step S101. The shading is corrected based on the shading data which was input in the storage unit (not illustrated) of the inspection device 1 in advance. The shading data is determined by the line sensor 20 picking up an image of a shading correction target 16 of which reflectance is uniform, and measuring the non-uniformity of brightness based on the two-dimensional image data of the image of the shading correction target 16.

In step S103, the image processing unit 25 corrects the distortion of the two-dimensional image of the wafer 10. The distortion is corrected based on the distortion data which was input in the storage unit (not illustrated) of the inspection device 1 in advance. The distortion data is determined by the line sensor 20 picking up the image of the later mentioned distortion correction target 17, and measuring the distortion amount in the two-dimensional image from the two-dimensional image data of the picked up image of the distortion correction target 17.

In step S104, the image processing unit 25 removes noise from the two-dimensional image of the wafer 10.

In step S105, the image processing unit 25 performs a predetermined image processing on the two-dimensional image data corrected in steps S102 to S104, and inspects the surface of the wafer 10 (detects defects on the surface of the wafer 10).

In step S106, the inspection result by the image processing unit 25 and the two-dimensional image of the wafer 10 at the this time are output to and displayed on the image display device 26, and processing ends.

The distortion data is determined by measuring the distortion amount using the distortion correction target 17 when the inspection device 1 is manufactured or when the line sensor 20 is replaced, and is input to the storage unit (not illustrated) of the inspection device 1.

When the inspection device 1 according to the present embodiment is manufactured, the distortion amount in the two-dimensional image is measured in the distortion measurement step after the assembly step, and the distortion data determined based on this distortion amount is input to the storage unit of the inspection device 1. After the inspection step, the inspection device 1 is completed. Measuring the distortion amount is not limited to after the assembly step, but the distortion amount may be measured when assembly of the line sensor 20 is completed, using a single line sensor 20 and dedicated test machine, and this distortion data is input separately into the storage unit of the inspection device 1 in which the line sensor 20 is installed.

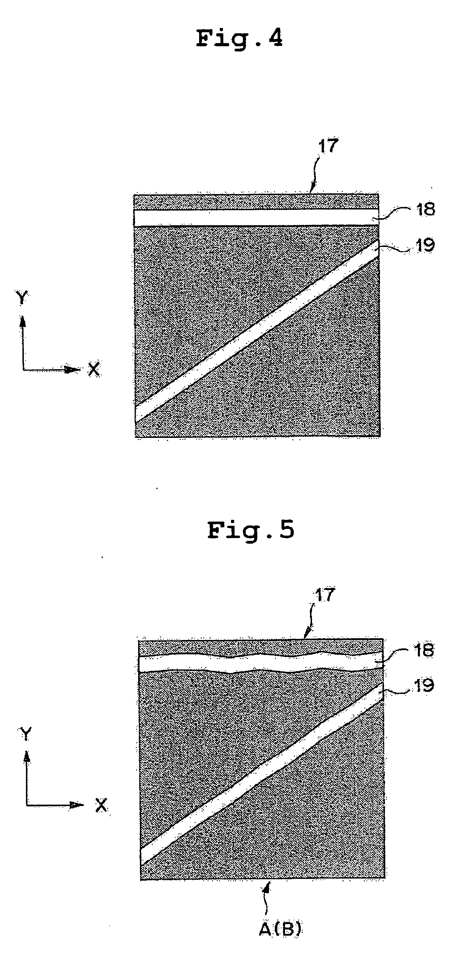

As Fig. 4 shows, the distortion correction target 17 has a linear pattern 18 extending substantially in parallel with the X direction (main scanning axis direction) and an oblique linear pattern 19 extending in a direction inclined with respect to the X direction. The length of the linear pattern 18 when projected onto the line sensor 20 is a length the same or longer than the image sensing range of the line sensor 20, so that the image of the linear pattern 18 can be picked up by all the pixels of the line sensor 20. The length of the oblique pattern 19 when projected onto the linear pattern 18 (length of the oblique pattern 19 in the X direction) is a length the same or longer than the image sensing range of the line sensor 20, so that the image of the oblique pattern 19 can be picked up by all the pixels of the line sensor 20. The widths of the linear pattern 18 and the oblique pattern 19 can be about 3 to 4 pixels or more, so that resolution of the pattern is sufficient in the two-dimensional image.

The distortion can be measured only if the oblique pattern 19 is inclined from the linear pattern 18, but in terms of the measurement accuracy, it is preferable that the inclination angle of the oblique pattern 19, with respect to the X direction, is between 45° to 90°. In the distortion correction target 17, the accuracy of the linearity and angle of the pattern is assumed to be guaranteed by the measurement means, which is not illustrated.

As mentioned above, the line sensor 20 is comprised of a plurality of one-dimensional photo-electric transfer element 21, which are connected in a line, but each one-dimensional photo-electric transfer element 21 is not always perfectly connected linearly, but is in a somewhat distorted state, as shown in Fig. 2. Therefore the two-dimensional image of the distortion correction target 17, created by picking up the image of the distortion correction target 17 using the line sensor 20 shown in Fig. 2, is distorted (in the X direction and Y direction), as shown in Fig. 5, for example. In Fig. 2 and Fig. 5, distortion is exaggerated to make explanation clear. What is noticeable is that distortion is inverted at every joint between one-dimensional photo-electric transfer elements 21, and this is a problem. In other words, the problem is that interpolation cannot be performed based on the distortion of a single one-dimensional photo-electric transfer element 21.

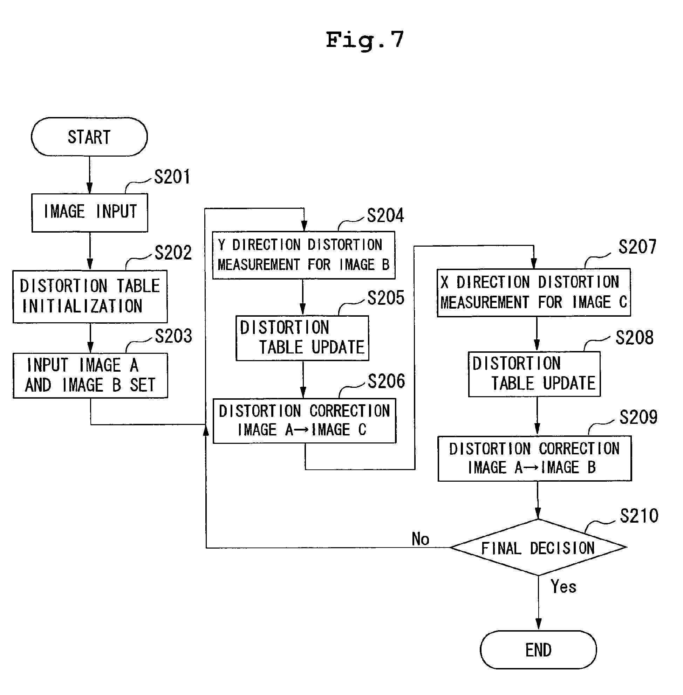

The distortion measurement step using this distortion correction target 17 will now be described with reference to the flow chart in Fig. 7. First in step S201, an image of the distortion correction target 17 is input. At this time, the line sensor 20 relatively moves in the Y direction, with respect to the stage 15 and the distortion correction target 17, picks up the image of the distortion correction target 17 at each relatively moved position, and outputs the (one-dimensional) image signal to the image processing unit 25. When the image signal is input to the image processing unit 25, the image processing unit 25 creates the two-dimensional image data of the distortion correction target 17 (that is, the linear pattern 18 and the oblique pattern 19), based on the (one-dimensional) image signal acquired respectively, by relatively moving the line sensor 20 in the Y direction.

In this way, the images of the linear pattern 18 and the oblique pattern 19 can be picked up all at once by picking up the image of the distortion correction target 17 while relatively moving the line sensor 20 in the Y direction (sub-scanning axis direction). Thereby the time for measuring the distortion amount can be decreased. The input image at this time, that is, the two-dimensional image of the distortion correction target 17 in Fig. 5, is regarded as image A.

Then in step S202, all zeros are set in the distortion table, which is the distortion amount measurement result, and the measurement result is initialized. In the distortion table, the distortion amount in the X direction (hereafter called the "main scanning axis distortion amount") and the distortion amount in the Y direction (hereafter called the "sub-scanning axis distortion amount) are regarded as a set, and there are the same number of sets as the number of pixels of the line sensor 20. The distortion amount is measured by adding the distortion amount, calculated in subsequent steps, to the distortion table, and as a result, the accuracy of measurement is improved.

In step S203, the image data of the input image A (linear pattern 18 and oblique pattern 19) created in step S201 is copied, and the image A is set in the image B, which is a virtual two-dimensional image.

Then in step S204, the distortion amount in the Y direction in the image B is calculated from the image data of the image B, using the linear pattern 18 of the image B. Specifically, the edge positions in the Y direction, with respect to the X coordinates, are measured at the pattern edges of the linear pattern 18 in the image B, that is, portions where the brightness level of the image changes from black to white in the top to bottom directions in Fig. 5. For example, in a 256 grayscale, the black portion of the image B is scale 20, and the white portion thereof is the scale 200, then the position of scale 110, which is there between (grayscale at this time is regarded as a) is defined as an edge position, and the Y coordinates, where the brightness level becomes scale 110 with respect to the X direction coordinates corresponding to each pixel of the line sensor 20, is determined.

In this case, there is no pixel which has exactly scale 110 in most areas, so an edge position is measured not in integral pixel units, but with decimal accuracy, by interpolating pixels before and after scale 110. For example, if the brightness of a pixel at Y = 64 (coordinate at this time is regarded as b) is scale 90 (scale at this time is regarded as c), and if the brightness of the pixel at Y = 65 (coordinate at this time is regarded as b+1) is scale 170 (scale at this time is regarded as d), then an edge position is expressed as follows by linear interpolation between these two points.

```
Edge position = b+ (a-c)/(d-c) = 64 + (110-90)/(170-90) = 64.25
```

Then the distortion amount in the Y direction is calculated based on the difference (shift amount or deviation) of the measured edge position in the Y direction and the ideal linear edge position. In other words, the distortion is bumps and inclinations of an image of the pattern 18 which should be a straight line. For the ideal linear edge position, the designed pattern position is used. If the designed position information is not available, a straight line, calculated from the measured edge position in the Y direction by the least square method, may be regarded as the ideal straight line. In this way, the distortion amount in the Y direction with respect to each pixel of the line sensor 20 is calculated.

In the next step S205, the distortion amount in the Y direction calculated in step S204 is added to the sub-scanning axis distortion amount in the distortion table. At this point, the main scanning axis distortion amount in the distortion table remains zero.

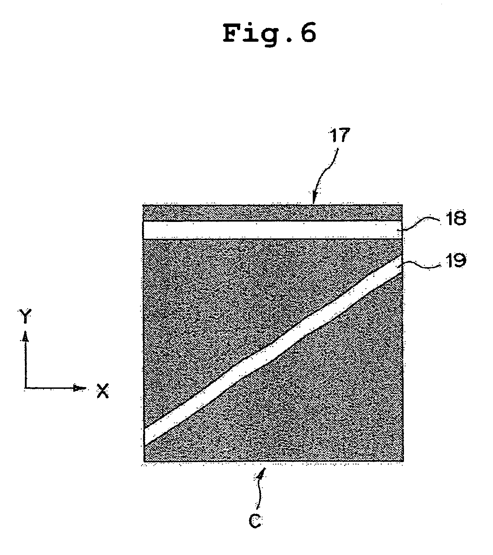

In step S206, distortion of the image A is corrected using the distortion table, and the image C, which is a corrected image, is created. In this correction, coordinate transformation is performed based on the main scanning axis distortion amount and sub-scanning axis distortion amount saved in the distortion table (in concrete terms, the brightness of the pixel shifted for the distortion amount, with respect to a coordinate, is regarded as the brightness in this coordinate), and the image C is created from the image A. The image in this stage is as shown in Fig. 6, for example. In the image C, the distortion in the Y direction has been corrected, so the linear pattern 18 has a clear straight line, but the oblique pattern 19 still has distortion.

In step S207, the distortion amount in the X direction in the image C is calculated using the oblique pattern 19 of the image C in the image data of the image C. In the image C, the distortion amount in the Y direction has been corrected, so it is a safe assumption that the distortion of the oblique pattern 19 is caused by the distortion in the X direction. Specifically, in the oblique pattern 19 of the image C, the edge position in the X direction, with respect to the Y coordinate, is measured in the same way as step S204 for a portion where the brightness level changes from black to white in a left to right direction (X direction) in Fig. 6.

If the inclination angle of the oblique pattern 19, with respect to the X direction, is 45°, then one edge exists approximately at one location in the X coordinate corresponding to each pixel of the line sensor 20, and the measurement value of the edge position is acquired. If the inclination angle of the oblique pattern 19 with respect to the X direction is smaller than 45°, an X coordinate, where an edge position measurement value cannot be acquired, exists, which is not desirable.

Then the distortion amount in the X direction is calculated based on the difference (shift amount or deviation) of the measured edge position in the X direction and the edge position of an ideal straight line. The designed pattern position is used for the edge position of the ideal straight line. Even if the designed position information is not available, a straight line may be calculated from the measured edge position in the X direction by the least square method, and used as the ideal straight line. In this way, the distortion amount in the X direction, with respect to each pixel of the line sensor 20, is calculated.

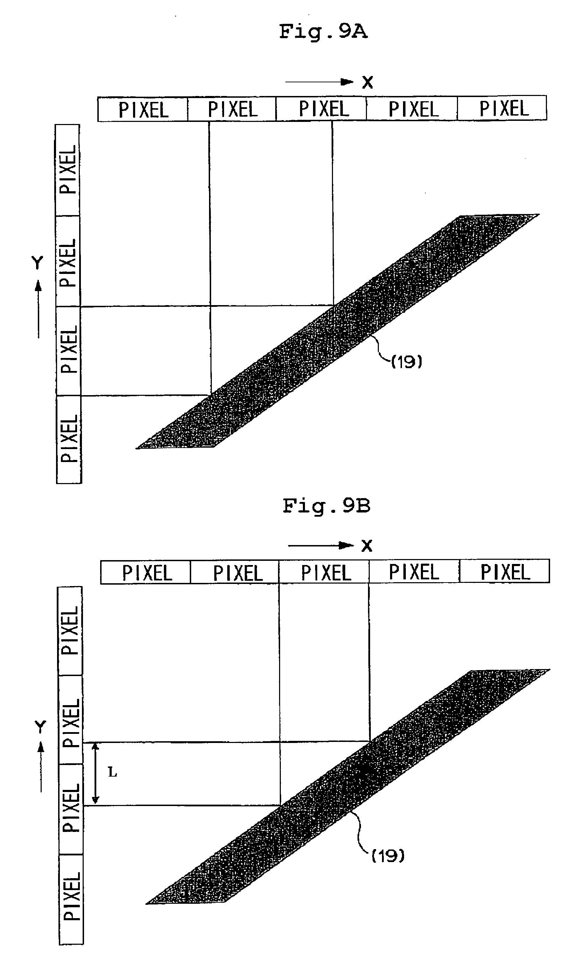

The edge position is measured for a portion where the edge exists, for each Y coordinate (pixel) in the image C, from left to right (X direction) in Fig. 6, so it does not always corresponds to a pixel (in the X direction) of the line sensor 20 (see Fig. 9(a)). It is preferable to determine the closest pixel (in the X direction) of the line sensor 20 based on the acquired numeric value of the edge position. The measurement value of the edge position not perfectly correspond to a pixel of the line sensor 20 causes a measurement error, but a measurement error small enough to be ignored can be further decreased by repeatedly executing the processing in the subsequent step S210.

In the next step S208, the distortion amount in the X direction, calculated in step S207, is added to the main scanning axis distortion amount in the distortion table. By this, the distortion amounts in both the X and Y directions are acquired. The distortion amounts in this stage are still significant as the measurement values of the distortion amounts, but a slight error may be generated in the measurement value of the distortion amount in the Y direction because of the distortion in the X direction, which results in a measurement error, even if very minor. Therefore in order to improve the measurement accuracy of the distortion amount and confirm measurement accuracy, the following steps are continuously executed.

In step S209, the distortion in the image A is corrected using the distortion table, in the same way as step S206, and the corrected two-dimensional image (image data) is set in the image B (image data).

In step S210, step S204 to step S209 are repeated until a predetermined condition is satisfied. The distortion amounts (in the Y direction and the X direction) acquired in step S204 and step S207 are small, since there are just residuals. By adding these values to the distortion table, the measurement accuracy of the distortion amounts can be improved. An example of a predetermined condition is that the distortion amounts (in the Y direction and the X direction) newly acquired in step S204 and step S207 become smaller than a predetermined value (threshold). At this point, it is judged that sufficient measurement accuracy is acquired, and the measurement ends. The end of measurement is not limited to this, but may be when steps S204 to step S209 are repeated for a predetermined number of times (which is set such that sufficient measurement accuracy can be implemented).

According to the procedure in Fig. 7, the distortion of the image is corrected many times, but it is important to note that the distortion is always corrected in the image A (input image). If the image A is superimposed on the image acquired after distortion is corrected and then distortion is corrected, errors due to interpolation accumulate, so as a result, an error of the image increases, and error becomes major at the edge position acquired based on the measurement of this image.

The distortion table acquired like this shows the deviation amount of each pixel of the line sensor 20 in the X direction and the Y direction from a position where the pixel should be. If the distortion table is determined like this, for the inspection device in which the line sensor 20 is installed when the inspection device 1 is manufactured, and is input in the storage unit (not illustrated) of the inspection device 1 as the distortion data in advance, the two-dimensional image acquired by the line sensor 20 can be easily corrected (distortion correction).

As a result, according to the manufacturing method for the inspection device 1 of the present embodiment, the distortion amount in the Y direction (sub-scanning axis direction) is calculated from the two-dimensional image data of the linear pattern 18, and the distortion amount in the X direction (main scanning axis direction) is calculated from the two-dimensional image data of the oblique pattern 19 and from the distortion amount in the Y direction calculated in the previous step, so the distortion amounts in the X direction and the Y direction can be independently measured, and in the manufacturing steps of the inspection device 1 using the line sensor 20, the distortion amount can be measured for all the pixels of the line sensor 20, including the joints between one-dimensional photo-electric transfer elements 21. Since the linear pattern 18 extends in the X direction, only the distortion in the Y direction can be calculated first, then using the distortion amount in the Y direction calculated like this and the two-dimensional image data of the oblique pattern 19, only the distortion amount in the X direction can be calculated.

When the distortion amount in the X direction (main scanning axis direction) is calculated, the distortion is corrected for the two-dimensional image (image A) of the oblique pattern 19, and corrected image data (image C) is created using the distortion amount in the Y direction (sub-scanning axis direction) calculated in the previous step, and the distortion amount in the X direction is calculated from the created corrected image data, thereby only the distortion amount in the X direction can be easily measured.

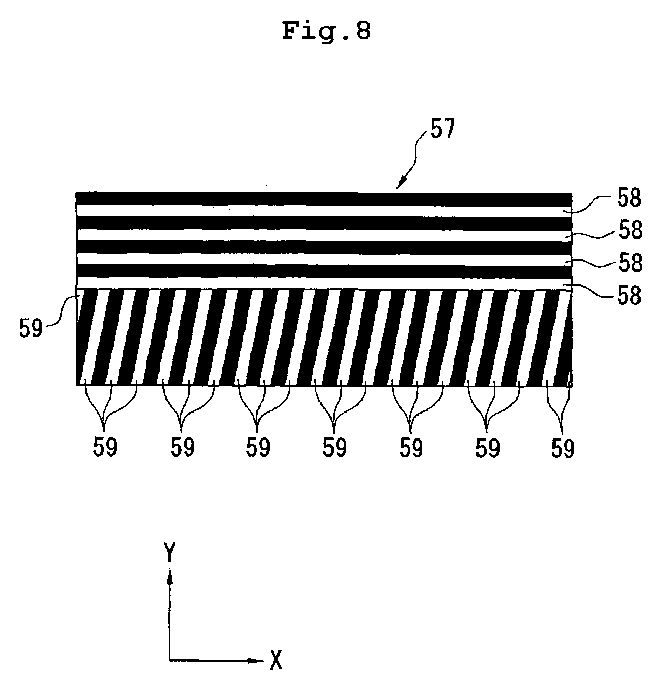

In the above embodiment, the distortion correction target 57 may have a plurality of linear patterns 58 extending in parallel, and a plurality of oblique patterns 59 extending in parallel, as shown in Fig. 8. The plurality of linear patterns 58 extend substantially in parallel with the X direction (main scanning axis direction), and the plurality of oblique patterns 59 linearly extend in a direction inclined from the X direction.

By increasing the number of linear patterns 58 and a number of oblique patterns 59 like this, the deviation amounts of the edge positions in the X direction and the Y direction measured with respective patterns are averaged, for example, and thereby the measurement accuracy of the distortion amount can be further improved. And the influence of foreign substances, which happen to be on the distortion correction target 57 by accident, on measurement accuracy can be decreased by comparing the deviation amounts of the edge positions in the X and Y directions, measured with respective patterns, removing abnormal values or removing values that are greater or smaller than a predetermined threshold.

In Fig. 8, the inclination angle of the oblique pattern 59 with respect to the X direction is set to 79°. By increasing the inclination angle of the oblique pattern 59 with respect to the X direction, the edge position information in the X direction in each X coordinate (that is, each pixel of the line sensor 20), increases, so the measurement accuracy of the distortion amount can be further improved.

If the inclination angle of the oblique pattern with respect to the X direction is θ, the length L when the portion of the oblique pattern 19 corresponding to one pixel of the line sensor 20 is projected in the Y direction is $L = \tan\theta$ as shown in Fig. 9(b).

If L is 1 or more, then one or more measurement values (in the Y direction) of the edge positions for one pixel (in the X direction) of the line sensor 20 should be averaged, which is desirable to measure the (respective) distortion amount measurement in all the pixels of the line sensor 20. If L is less than 1, the deficiency of the measurement values must be complemented by interpolation. However, even if L is less than 1, L can become substantially 1 or more by increasing the number of oblique patterns. If both sides of the pattern, that is, both the portion where the brightness level of the image changes from black to white, and the portion where the brightness level of the image changes from white to black, are used, then measurement values substantially the same as the case of two patterns, can be acquired, so an effect similar to the case of increasing the number of patterns can be implemented.

Generally the greater the inclination angle of the oblique pattern with respect to the X direction, the better the measurement accuracy of the distortion amount, since the number of measurement values increases, but the size of the distortion correction target in the Y direction increases. Therefore an appropriate angle should be selected according to the balance of the measurement accuracy and available space. Making L 1 or a higher integer is preferable, since the number of edge position information, which is acquired per pixel of the line sensor 20, becomes the same for all the line sensor pixels. In the example in Fig. 8, L = tan 79° $\cong$ 5.

In the distortion measurement step according to the present embodiment, it is preferable that the sub-scanning, that is, scanning by the line sensor 20, is accurately performed. Specifically, it is preferable that errors of linearity of scanning by the line sensor 20 and the position accuracy of the line sensor 20 with respect to the distortion correction target 17, are controlled to be 1/10 or less of the distortion amount to be measured. It is also preferred that the actual relative position of the line sensor 20, with respect to the distortion correction target 17, is accurately corresponded with the relative position in the picked up image, by counting the linear encoder pulse at each pixel to generated an (image) pickup pulse using a linear encoder (not illustrated).

In the above embodiment, the edge positions are determined from the brightness data of two adjacent pixels by linear interpolation in step S204 and step S207, but the present invention is not limited to this, but, for example, the cubic function (with respect to coordinates) may be approximated using the brightness data of four adjacent pixels so that the edge positions are determined using the approximate cubic function, thereby measurement accuracy can be improved more than linear interpolation.

Also in the above embodiment, the distortion target 17 has a linear pattern 18 and an oblique pattern 19, but the present invention is not limited to this configuration, but a linear and an oblique pattern may be created separately, and two-dimensional images of the linear pattern and oblique pattern may be picked up independently. In this case, the two-dimensional image of the linear pattern is used when the distortion amount in the Y direction is measured, and the two-dimensional image of the oblique pattern is used when the distortion amount in the Y direction is measured.

## Claims

1. A manufacturing method for an inspection device which has: a line sensor that picks up an image of a test object and outputs image signals, and is constructed by a plurality of line sensor elements connected in a line; and an image processing unit that creates two-dimensional image data of the test object based on the image signals acquired respectively by relatively moving the line sensor in a sub-scanning axis direction that is perpendicular to a main scanning axis direction extending in a longitudinal direction of the line sensor, and which inspects a surface of the test object based on the two-dimensional image data of the test object, comprising:

   a distortion measurement step of measuring a distortion amount of the two-dimensional image,
   the distortion measurement step comprising:
   a first step of the line sensor picking up an image of a linear pattern extending substantially in parallel with the main scanning axis direction to create two-dimensional image data of the linear pattern, and calculating a distortion amount of the sub-scanning axis direction in the two-dimensional image from the created two-dimensional image data of the linear pattern; and
   a second step of the line sensor picking up an image of an oblique linear pattern extending in an inclined direction with respect to the main scanning axis direction to create two-dimensional image data of the oblique pattern, and calculating a distortion amount in the main scanning axis direction in the two-dimensional image from the created two-dimensional image data of the oblique pattern and the distortion amount in the sub-scanning axis direction calculated in the first step.

2. The manufacturing method for an inspection device according to Claim 1, **characterized in that** in the second step, the distortion of the two-dimensional image of the oblique pattern is corrected using the distortion amount in the sub-scanning axis direction calculated in the first step, to create corrected image data, and the distortion amount in the main scanning axis direction is calculated from the created corrected image data.

3. The manufacturing method for an inspection device according to Claim 1 or Claim 2, further comprising a third step of calculating and storing the distortion amounts in both the main scanning axis direction and the sub-scanning axis direction for each pixel of the line sensor.

4. A manufacturing method for an inspection device which has: a line sensor that picks up an image of a test object and outputs image signals, and is constructed by a plurality of line sensor elements connected in a line; and an image processing unit that creates two-dimensional image data of the test object based on the image signals acquired respectively by relatively moving the line sensor in a sub-scanning axis direction that is perpendicular to a main scanning axis direction extending in a longitudinal direction of the line sensor, and which inspects a surface of the test object based on the two-dimensional image data of the test object, comprising:

a distortion measurement step of measuring a distortion amount of the two-dimensional image,
the distortion measurement step comprising:
a first step of the line sensor picking up an image of a linear pattern extending substantially in parallel with the main scanning axis direction to create two-dimensional image data of the linear pattern;
a second step of the line sensor picking up an image of an oblique linear pattern extending in an inclined direction with respect to the main scanning axis direction to create two-dimensional image data of the oblique pattern;
a third step of setting a main scanning axis distortion amount, which is a distortion amount in the main scanning axis direction in the two-dimensional image, to zero, and setting a sub-scanning axis distortion amount, which is a distortion amount in the sub-scanning axis direction in the two-dimensional image, to zero;
a fourth step of copying the two-dimensional image data of the linear pattern created in the first step, and setting the copied data in virtual two-dimensional image data;
a fifth step of calculating a distortion amount in the sub-scanning axis direction in the virtual two-dimensional image from the virtual two-dimensional image data, and adding the calculated distortion amount in the sub-scanning axis direction to the sub-scanning axis distortion amount;
a sixth step of correcting the distortion of the two-dimensional image of the oblique pattern created in the second step, using the main scanning axis distortion amount and the sub-scanning axis distortion amount to create corrected image data;
a seventh step of calculating a distortion amount in the main scanning axis direction in the corrected image from the corrected image data, and adding the calculated distortion amount in the main scanning axis direction to the main scanning axis distortion amount;
an eighth step of correcting the distortion of the two-dimensional image of the linear pattern created in the first step, using the main scanning axis distortion amount and the sub-scanning axis distortion amount, and setting the corrected two-dimensional image data in the virtual two-dimensional image data; and
a ninth step of repeating the fifth step to the eighth step for a predetermined number of times, or until the distortion amount in the sub-scanning axis direction in the virtual two-dimensional image calculated in the fifth step and the distortion amount in the main scanning axis direction in the corrected image calculated in the seventh step become smaller than a predetermined value, respectively.

5. The manufacturing method for an inspection device according to Claim 4, further comprising a tenth step of calculating and storing the distortion amounts in both the main scanning axis direction and the sub-scanning axis direction for each pixel of the line sensor.

6. The manufacturing method for an inspection device according to any one of Claim 1 to Claim 5, **characterized in that** in the distortion measurement step, the line sensor is relatively moved in the sub-scanning axis direction so as to pickup the images of the linear pattern and the oblique pattern all at once.

# Fig.1

Fig.2

# Fig.3

```
        ┌─────────────┐
        │    START    │
        └─────────────┘
               │
               ▼
S101 ─┤ IMAGE PICKUP │
               │
               ▼
S102 ─┤ SHADING CORRECTION │◄------ ┤ SHADING DATA │
               │
               ▼
S103 ─┤ DISTORTION CORRECTION │◄------ ┤ DISTORTION DATA │
               │
               ▼
S104 ─┤ NOISE REMOVAL │
               │
               ▼
S105 ─┤ DEFECT DETECTION │
               │
               ▼
S106 ─┤ OUTPUT │
               │
               ▼
        ┌─────────────┐
        │     END     │
        └─────────────┘
```

Fig.4

17

18

19

Y

X

Fig.5

17

18

19

Y

X

A(B)

# Fig.6

# Fig.7

START

IMAGE INPUT — S201

DISTORTION TABLE INITIALIZATION — S202

INPUT IMAGE A AND IMAGE B SET — S203

Y DIRECTION DISTORTION MEASUREMENT FOR IMAGE B — S204

DISTORTION TABLE UPDATE — S205

DISTORTION CORRECTION IMAGE A→IMAGE C — S206

X DIRECTION DISTORTION MEASUREMENT FOR IMAGE C — S207

DISTORTION TABLE UPDATE — S208

DISTORTION CORRECTION IMAGE A→IMAGE B — S209

FINAL DECISION — S210

No

Yes

END

Fig.8

## Fig.9A

## Fig.9B

## INTERNATIONAL SEARCH REPORT

| | International application No. |
|---|---|
| | PCT/JP2008/053419 |

A. CLASSIFICATION OF SUBJECT MATTER
*G01B11/30*(2006.01)i, *G06T1/00*(2006.01)i, *H04N1/19*(2006.01)i

According to International Patent Classification (IPC) or to both national classification and IPC

B. FIELDS SEARCHED

Minimum documentation searched (classification system followed by classification symbols)
G01B11/30, G06T1/00, H04N1/19

Documentation searched other than minimum documentation to the extent that such documents are included in the fields searched

| Jitsuyo Shinan Koho | 1922-1996 | Jitsuyo Shinan Toroku Koho | 1996-2008 |
|---|---|---|---|
| Kokai Jitsuyo Shinan Koho | 1971-2008 | Toroku Jitsuyo Shinan Koho | 1994-2008 |

Electronic data base consulted during the international search (name of data base and, where practicable, search terms used)

C. DOCUMENTS CONSIDERED TO BE RELEVANT

| Category* | Citation of document, with indication, where appropriate, of the relevant passages | Relevant to claim No. |
|---|---|---|
| Y<br>A | JP 2003-143381 A (Canon Inc.),<br>16 May, 2003 (16.05.03),<br>Par. Nos. [0021] to [0029]; Figs. 1, 5 to 7<br>& US 7123388 B<br>Column 3, line 10 to column 4, line 25;<br>Figs. 1, 5 to 7<br>& EP 1289257 A | 1-3,6<br>4,5 |
| Y | JP 3-006409 A (Dainippon Screen Mfg. Co., Ltd.,<br>YM Systems Kabushiki Kaisha),<br>11 January, 1991 (11.01.91),<br>Page 7, lines 7 to 18; page 14, line 18 to<br>page 15, line 6; Figs. 3, 5<br>(Family: none) | 1-3,6 |

| ☒ Further documents are listed in the continuation of Box C. | ☐ See patent family annex. |
|---|---|

\* Special categories of cited documents:
"A" document defining the general state of the art which is not considered to be of particular relevance
"E" earlier application or patent but published on or after the international filing date
"L" document which may throw doubts on priority claim(s) or which is cited to establish the publication date of another citation or other special reason (as specified)
"O" document referring to an oral disclosure, use, exhibition or other means
"P" document published prior to the international filing date but later than the priority date claimed

"T" later document published after the international filing date or priority date and not in conflict with the application but cited to understand the principle or theory underlying the invention
"X" document of particular relevance; the claimed invention cannot be considered novel or cannot be considered to involve an inventive step when the document is taken alone
"Y" document of particular relevance; the claimed invention cannot be considered to involve an inventive step when the document is combined with one or more other such documents, such combination being obvious to a person skilled in the art
"&" document member of the same patent family

| Date of the actual completion of the international search<br>31 March, 2008 (31.03.08) | Date of mailing of the international search report<br>08 April, 2008 (08.04.08) |
|---|---|
| Name and mailing address of the ISA/<br>Japanese Patent Office | Authorized officer |
| Facsimile No. | Telephone No. |

Form PCT/ISA/210 (second sheet) (April 2007)

**INTERNATIONAL SEARCH REPORT**

| International application No. |
| --- |
| PCT/JP2008/053419 |

C (Continuation).   DOCUMENTS CONSIDERED TO BE RELEVANT

| Category* | Citation of document, with indication, where appropriate, of the relevant passages | Relevant to claim No. |
| --- | --- | --- |
| A | JP 2002-286418 A  (Ricoh Co., Ltd.),<br>03 October, 2002 (03.10.02),<br>Par. Nos. [0003], [0018] to [0019];<br>Figs. 2, 7, 15<br>(Family: none) | 1,2,4,5 |
| A | JP 9-229635 A  (Matsushita Electric Industrial Co., Ltd.),<br>05 September, 1997 (05.09.97),<br>Par. Nos. [0001], [0069] to [0070]; Fig. 16<br>(Family: none) | 1,2,4,5 |

Form PCT/ISA/210 (continuation of second sheet) (April 2007)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2001524205 A
- JP H10311705 B